# EUROPEAN PATENT APPLICATION

(11) **EP 4 052 787 A1**
(43) Date of publication of application: **07.09.2022**
(21) Application number: 21160136.4
(22) Date of filing: 02.03.2021
(51) Int. Cl.: B01J 23/10, B01D 53/94, B01J 23/40

(54) **NOX STORAGE MATERIAL**

(71) Applicant: Johnson Matthey Public Limited Company, London EC4A 4AB (GB)
(72) Inventor: BIDAL, Yannick, Royston, Hertfordshire SG8 5HE (GB); CASTANON RODRIGUEZ, Alba, Royston, Hertfordshire SG8 5HE (GB); CHIFFEY, Andrew, Royston, Hertfordshire SG8 5HE (GB); COOPER, Oliver, Royston, Hertfordshire SG8 5HE (GB); RADCLIFFE, Jonathan, Royston, Hertfordshire SG8 5HE (GB)
(74) Representative: Wilson, Nicola Ann

(57) **Abstract**

The present invention relates to a NOx storage material comprising a cerium-based mixed oxide comprising cerium, oxygen, and a first rare earth metal other than cerium,
wherein said NOx storage material further comprises a second rare earth metal other than cerium;
wherein said first rare earth metal is different to said second rare earth metal; and wherein said second rare earth metal is disposed or supported on the surface of the cerium-based mixed oxide.

## Description

### FIELD OF THE INVENTION

The invention relates to a NOx storage material, a method of making a NOx storage material, and a NOx absorber catalyst comprising the NOx storage material. The invention also relates to a method of treating an exhaust gas from an internal combustion engine, and emission systems for internal combustion engines comprising the lean NOₓ trap catalyst.

### BACKGROUND OF THE INVENTION

Internal combustion engines produce exhaust gases containing a variety of pollutants, including nitrogen oxides ("NOₓ"), carbon monoxide, and uncombusted hydrocarbons, which are the subject of governmental legislation. Increasingly stringent national and regional legislation has lowered the amount of pollutants that can be emitted from such diesel or gasoline engines. Emission control systems are widely utilized to reduce the amount of these pollutants emitted to atmosphere, and typically achieve very high efficiencies once they reach their operating temperature (typically, 200 °C and higher).

One exhaust gas treatment component utilized to clean exhaust gas is the lean NOₓ trap catalyst (LNT), also referred to in the art as the NOₓ adsorber catalyst (NAC). NOₓ adsorber catalysts are devices that adsorb NOₓ under lean exhaust conditions, release the adsorbed NOₓ under rich conditions, and reduce the released NOₓ to form N₂. A NOₓ adsorber catalyst typically includes a NOₓ adsorbent for the storage of NOₓ and an oxidation/reduction catalyst.

The NOₓ adsorbent component is typically an alkaline earth metal, an alkali metal, a rare earth metal, or combinations thereof. These metals are typically found in the form of oxides. The oxidation/reduction catalyst is typically one or more noble metals, preferably platinum, palladium, and/or rhodium. Typically, platinum is included to perform the oxidation function and rhodium is included to perform the reduction function. The oxidation/reduction catalyst and the NOₓ adsorbent are typically loaded on a support material such as an inorganic oxide for use in the exhaust system.

The NOₓ adsorber catalyst performs three functions. First, nitric oxide reacts with oxygen to produce NO₂ in the presence of the oxidation catalyst. Second, the NO₂ is adsorbed by the NOₓ adsorbent in the form of an inorganic nitrate (for example, BaO or BaCO₃ is converted to Ba(NO₃)₂ on the NOₓ adsorbent). Lastly, when the engine runs under rich conditions, the stored inorganic nitrates decompose to form NO or NO₂ which are then reduced to form N₂ by reaction with carbon monoxide, hydrogen and/or hydrocarbons (or via NHₓ or NCO intermediates) in the presence of the reduction catalyst. Typically, the nitrogen oxides are converted to nitrogen, carbon dioxide and water in the presence of heat, carbon monoxide, hydrogen and hydrocarbons in the exhaust stream.

PCT Intl. Appl. WO 2004/076829 discloses an exhaust-gas purification system which includes a NOₓ storage catalyst arranged upstream of an SCR catalyst. The NOₓ storage catalyst includes at least one alkali, alkaline earth, or rare earth metal which is coated or activated with at least one platinum group metal (Pt, Pd, Rh, or Ir). A particularly preferred NOₓ storage catalyst is taught to include cerium oxide coated with platinum and additionally platinum as an oxidizing catalyst on a support based on aluminium oxide. EP 1027919 discloses a NOₓ adsorbent material that comprises a porous support material, such as alumina, zeolite, zirconia, titania, and/or lanthana, and at least 0.1 wt% precious metal (Pt, Pd, and/or Rh). Platinum carried on alumina is exemplified.

US 2015/0336085 describes a nitrogen oxide storage catalyst composed of at least two catalytically active coatings on a support body. The lower coating contains cerium oxide and platinum and/or palladium. The upper coating, which is disposed above the lower coating, contains an alkaline earth metal compound, a mixed oxide, and platinum and palladium. The nitrogen oxide storage catalyst is said to be particularly suitable for the conversion of NOₓ in exhaust gases from a lean burn engine, e.g. a diesel engine, at temperatures of between 200 and 500 °C.

At low temperatures (typically below about 200 °C), the NOₓ storage function of these catalysts is inefficient and continues to be an area of catalyst development in need of improvement. It is also desirable for catalysts to be developed that have little or no NOₓ storage properties at greater than a specific temperature, to allow control of when NOₓ is released for subsequent conversion by, for example, a further downstream catalyst.

As with any exhaust gas treatment system and process, it is desirable to attain still further improvements in materials and catalysts with improved performance characteristics in order to meet legislative regulatory requirements regarding emissions. We have discovered a new NOx storage material with improved low temperature NOₓ storage characteristics and improved NOx release properties relative to known materials.

### SUMMARY OF THE INVENTION

In a first aspect of the invention there is provided a NOx storage material comprising a cerium-based mixed oxide comprising cerium and a first rare earth metal other than cerium,
wherein said NOx storage material further comprises a second rare earth metal other than cerium;
wherein said first rare earth metal is different to said second rare earth metal; and
wherein said second rare earth metal is disposed or supported on the surface of the cerium-based mixed oxide.

In a second aspect of the invention there is provided a method of making a NOx storage material, comprising mixing a solution of a non-cerium rare earth metal salt with ceria particles, spray-drying the particles, and heating the spray-dried particles, to produce a spray dried powder of the NOx storage material.

In a third aspect of the invention there is provided a NOx storage material obtained or obtainable by the method as hereinbefore defined.

In a fourth aspect of the invention there is provided a NOx adsorber catalyst comprising a storage layer, said storage layer comprising a NOx storage material as hereinbefore defined.

In a fifth aspect of the invention there is provided an emission treatment system for treating a flow of a combustion exhaust gas from an internal combustion engine comprising the NOx adsorber catalyst as hereinbefore defined.

In a fifth aspect of the invention there is provided a method of treating an exhaust gas from an internal combustion engine comprising contacting the exhaust gas with the NOx adsorber catalyst as hereinbefore defined.

In a sixth aspect of the invention there is provided the use of a NOx storage material as hereinbefore defined to absorb NOx in an exhaust gas from an internal combustion engine.

### DEFINITIONS

The term "washcoat" is well known in the art and refers to an adherent coating that is applied to a substrate, usually during production of a catalyst.

The acronym "PGM" as used herein refers to "platinum group metal". The term "platinum group metal" generally refers to a metal selected from the group consisting of ruthenium, rhodium, palladium, osmium, iridium and platinum, preferably a metal selected from the group consisting of ruthenium, rhodium, palladium, iridium and platinum. In general, the term "PGM" preferably refers to a metal selected from the group consisting of rhodium, platinum and palladium.

The term "noble metal" as used herein generally refers to a metal selected from the group consisting of ruthenium, rhodium, palladium, silver, osmium, iridium, platinum, and gold. In general, the term "noble metal" preferably refers to a metal selected from the group consisting of rhodium, platinum, palladium and gold.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The term "dopant" as used herein means that the rare earth may be present in the lattice structure of a material, may be on the surface of the material, may be present in pores in the material, or any combination of the above.

The expression "substantially free of" as used herein with reference to a material means that the material may be present in a minor amount, such as ≤ 5% by weight, preferably ≤ 2 % by weight, more preferably ≤ 1 % by weight. The expression "substantially free of" embraces the expression "does not comprise".

The term "loading" as used herein refers to a measurement in units of g/ft³ on a metal weight basis.

### DETAILED DESCRIPTION OF THE INVENTION

The NOx storage material of the invention comprises a cerium-based mixed oxide comprising cerium, oxygen, and a first rare earth metal other than cerium, wherein said NOx storage material further comprises a second rare earth metal other than cerium;
wherein said first rare earth metal is different to said second rare earth metal; and
wherein said second rare earth metal is disposed or supported on the surface of the cerium-based mixed oxide.

The cerium, first rare earth metal other than cerium, and second rare earth metal other than cerium are generally present as oxides. However, it is not excluded that they may be present at least partly in the form of hydroxides or oxyhydroxides. The proportions of these elements can be determined using standard analytical techniques, e.g. X-ray fluorescence.

By "mixed oxide" it is meant that a mixture of oxides exists in a single phase, as is conventionally known in the art. Thus the NOx storage material of invention may comprise a phase that comprises, consists essentially of or consists of cerium, oxygen, and a first rare earth metal other than cerium. Preferably such a phase is substantially homogeneous, and more preferably is homogeneous. Alternatively or additionally, the NOx storage material of the invention may contain a "lattice" which comprises, consists essentially of or consists of cerium, oxygen, and a first rare earth metal other than cerium. In this context "lattice" means a three dimensional framework of elements, i.e. cerium, oxygen, and a first rare earth metal other than cerium, in which each of these elements is bonded to another element that may be the same element or a different element.

The first rare earth metal other than cerium is selected from the list consisting of dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y). Preferably the rare earth metal other than cerium is lanthanum (La), neodymium (Nd), samarium (Sm), praseodymium (Pr), or holmium (Ho). More preferably the rare earth metal other than cerium is lanthanum (La) or neodymium (Nd), and particularly preferably is lanthanum (La).

The second rare earth metal other than cerium is selected from the list consisting of dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y). Preferably the rare earth metal other than cerium is lanthanum (La), neodymium (Nd), samarium (Sm), praseodymium (Pr), or holmium (Ho). More preferably the rare earth metal other than cerium is lanthanum (La) or neodymium (Nd), and particularly preferably is neodymium (Nd).

Thus in a particularly preferred embodiment, the first rare earth metal other than cerium is lanthanum (La), and the second rare earth metal other than cerium is neodymium (Nd).

Without wishing to be bound by theory, it is thought that there is a synergistic benefit to having two different rare earth metals other than ceria, each of which is present in a different chemical environment to the other. That is, the first rare earth metal other than ceria is present as part of the lattice structure of the mixed oxide, and the second rare earth metal other than ceria is present only on the surface of the NOx storage material (i.e. not as part of the lattice structure of the mixed oxide).

The NOx storage material may further comprise zirconium. The zirconium is preferably present as an oxide, i.e. as zirconia. Where zirconium is present in the NOx storage material, it forms, together with the cerium and oxygen, a ceria/zirconia mixed oxide.

A preferred NOx storage material of the invention therefore comprises a cerium-based mixed oxide comprising cerium, zirconium, oxygen, and a first rare earth metal other than cerium, wherein said NOx storage material further comprises a second rare earth metal other than cerium; wherein said first rare earth metal is different to said second rare earth metal; and wherein said second rare earth metal is disposed or supported on the surface of the cerium-based mixed oxide.

In NOx storage materials where zirconium is present, the zirconium (or zirconia) is preferably present in an atomic ratio with cerium that is less than 1:1, preferably less than 5:1, more preferably less than 10:1, and particularly preferably less than 20:1.

In NOx storage materials where zirconium is present, the zirconium (or zirconia) is preferably present in a wt% based on the total weight of the NOx storage material of less than 50 wt%, preferably less than 25 wt%, more preferably less than 10 wt%, and particularly preferably less than 5 wt%.

The NOx storage material preferably has the following composition:
50-95 wt% CeO₂
1-10 wt% ZrO₂
0.5-20 wt% first rare earth metal other than ceria
0.5-20 wt% second rare earth metal other than ceria

Particularly preferably, the NOx storage material has the following composition:
75-95 wt% CeO₂
1-5 wt% ZrO₂
2-10 wt% first rare earth metal other than ceria
2-10 wt% second rare earth metal other than ceria

The NOₓ storage material may further comprise an alkali metal or alkaline earth metal, e.g. barium. It should be noted, however, that it is not necessary to include barium in the NOₓ storage materials of the invention, i.e. barium is an optional component of compositions of the invention.

In NOx storage materials as described herein where the NOₓ storage material does comprise barium, the barium is preferably present in an amount of 0.1 to 10 weight percent barium, and more preferably 0.5 to 5 weight percent barium, e.g. about 4.5 weight percent barium, expressed as a weight % of the NOx storage material. The NOx storage material is preferably substantially free of alkali metals or alkaline earth metals, and in particular is preferably substantially free of barium.

The preferred NOx storage materials that are substantially free of barium may be particularly advantageous because they store less NOₓ at temperatures in excess of 180, 200, 250 300, 350 or 400 °C, preferably about 400 °C than a comparable barium-containing composition. In other words, NOx storage materials as described herein that are substantially free of barium have improved NOₓ release properties at temperatures in excess of 180, 200, 250, 300, 350 or 400 °C, preferably about 400 °C than a comparable barium-containing NOx storage material. Such NOx storage materials may also have improved sulfur tolerance relative to an equivalent barium-containing composition. In this context, "improved sulfur tolerance" means that NOx storage materials as described herein that are substantially free of barium are either more resistant to sulfation, can be thermally desulfated at a lower temperature, or both, compared to an equivalent barium-containing NOx storage material.

The NOx storage material preferably further comprises one or more platinum group metals. The one or more platinum group metals (PGM) is preferably selected from the group consisting of palladium, platinum, rhodium, and mixtures thereof. Particularly preferably, the one or more platinum group metals is a mixture or alloy of platinum and palladium, preferably wherein the ratio of platinum to palladium is from 2:1 to 12:1 on a w/w basis, especially preferably about 5:1 on a w/w basis.

Preferably the one or more platinum group metals do not comprise or consist of rhodium.

The NOx storage material of the invention may be formed by spray-drying. A further aspect of the invention is therefore a method of making a NOx storage material, comprising mixing a solution of a non-cerium rare earth metal salt with ceria particles, spray-drying the particles, and heating the spray-dried particles, to produce a spray dried powder of the NOx storage material.

In preferred methods of the invention, the mixing of the non-cerium rare earth metal salt with ceria particles is carried out in a solvent, e.g. water.

In some preferred methods, the spray-drying of the particles is carried out with an inlet temperature of between 250 and 350 °C, preferably between 280 and 320 °C, particularly preferably about 300 °C.

In some preferred methods, the spray-drying of the particles is carried out with an outlet temperature of between 80 and 150 °C, preferably between 100 and 130 °C, particularly preferably about 110 °C.

In some preferred methods, the spray-dried powder is heated at a temperature of between 250 and 600 °C, preferably between 400 and 550 °C, particularly preferably about 500 °C.

Some preferred methods comprise the additional step of drying the heated spray-dried powder at a temperature of between 400 and 800 °C, preferably between 620 and 680 °C, particularly preferably about 650 °C.

A further aspect of the invention is a NOx storage material obtained or obtainable by the method as hereinbefore described.

A further aspect of the invention is a NOx adsorber catalyst comprising a storage layer, said storage layer comprising a NOx storage material as hereinbefore described. The NOx storage material in the storage layer may be obtained or obtainable by the method as hereinbefore described, i.e. the NOx storage material may be prepared by a spray-drying method.

In preferred NOx adsorber catalysts, the storage layer is supported on a metal or ceramic substrate. The substrate has an inlet end and an outlet end. The substrate has a first face and a second face defining a longitudinal direction therebetween. The substrate has a plurality of channels extending between the first face and the second face. The plurality of channels extend in the longitudinal direction and provide a plurality of inner surfaces (e.g. the surfaces of the walls defining each channel). Each of the plurality of channels has an opening at the first face and an opening at the second face.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the substrate has from 100 to 500 channels per square inch, preferably from 200 to 400. For example, on the first face, the density of open first channels and closed second channels is from 200 to 400 channels per square inch. The channels can have cross sections that are rectangular, square, circular, oval, triangular, hexagonal, or other polygonal shapes.

The substrate acts as a support for holding catalytic material. Suitable materials for forming the substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates is well known in the art.

The substrate is a flow-through monolith or a filter monolith, and preferably is a flow-through monolith.

It should be noted that the substrate, e.g. the flow-through monolith substrate, described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In NOx adsorber catalysts as described herein which comprise a ceramic substrate, the ceramic substrate may be made of any suitable refractory material, e.g., alumina, silica, titania, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In NOx adsorber catalysts as described herein which comprise a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

The NOx adsorber catalyst may therefore comprise an electrically heatable substrate and a storage layer comprising the NOx storage material as hereinbefore described disposed on the electrically heatable substrate. The electrically heatable substrate typically comprises an electrical power connection, preferably at least two electrical power connections, more preferably only two electrical power connections. Each electrical power connection may be electrically connected to the electrically heatable substrate and an electrical power source. The storage layer can be heated by Joule heating, where an electric current through a resistor converts electrical energy into heat energy.

The electrically heatable substrate is an electrically heating substrate, in use.

In general, the electrically heatable substrate comprises a metal. The metal may be electrically connected to the electrical power connection or electrical power connections.

In principle, any electrically heatable substrate may be used. Examples of electrically heatable substrates are described in US 4,300,956, US 5,146,743 and US 6,513,324.

Typically, the electrically heatable substrate is an electrically heatable honeycomb substrate. The electrically heatable substrate may be an electrically heating honeycomb substrate, in use.

The electrically heatable honeycomb substrate may comprise a metal monolith. The metal monolith may comprise a corrugated metal sheet or foil. The corrugated metal sheet or foil may be rolled, wound or stacked. When the corrugated metal sheet is rolled or wound, then it may be rolled or wound into a coil, a spiral shape or a concentric pattern.

The metal of the electrically heatable substrate, the metal monolith and/or the corrugated metal sheet or foil may comprise an aluminium ferritic steel, such as Fecralloy^{®}.

The electrically heatable substrate may comprise a heating disk. In general, the heating disk is wound to avoid an electrical short circuit from the anode to cathode.

The electrically heatable substrate may have a cell density of 50 to 200 cells per square inch (cpsi), preferably 75 to 175 cpsi.

One or more additional layers may optionally be present in addition to the storage layer comprising the NOₓ storage material of the invention.

In catalyst articles wherein one or more additional layers are present (i.e. in addition to the storage layer), the one or more additional layers have a different composition to the storage layer comprising the NOₓ storage material.

The one or more additional layers may comprise one zone or a plurality of zones, e.g. two or more zones. Where the one or more additional layers comprise a plurality of zones, the zones are preferably longitudinal zones. The plurality of zones, or each individual zone, may also be present as a gradient, i.e. a zone may not be of a uniform thickness along its entire length, to form a gradient. Alternatively, a zone may be of uniform thickness along its entire length.

In some preferred catalysts, one additional layer, i.e. a second layer, is present.

Typically, the second layer comprises a platinum group metal (PGM) (referred to below as the "second platinum group metal"). It is generally preferred that the second layer comprises the second platinum group metal (PGM) as the only platinum group metal (i.e. there are no other PGM components present in the catalytic material, except for those specified).

The second PGM may be selected from the group consisting of platinum, palladium, and a combination or mixture of platinum (Pt) and palladium (Pd). Preferably, the platinum group metal is selected from the group consisting of palladium (Pd) and a combination or a mixture of platinum (Pt) and palladium (Pd). More preferably, the platinum group metal is selected from the group consisting of a combination or a mixture of platinum (Pt) and palladium (Pd).

It is generally preferred that the second layer is (i.e. is formulated) for the oxidation of carbon monoxide (CO) and/or hydrocarbons (HCs).

Preferably, the second layer comprises palladium (Pd) and optionally platinum (Pt) in a ratio by weight of 1:0 (e.g. Pd only) to 1:5 (this is equivalent to a ratio by weight of Pt:Pd of 5:1 to 0:1). More preferably, the second layer comprises platinum (Pt) and palladium (Pd) in a ratio by weight of < 5:1, such as ≤ 3.5:1.

When the platinum group metal is a combination or mixture of platinum and palladium, then the second layer comprises platinum (Pt) and palladium (Pd) in a ratio by weight of 5:1 to 3.5:1, preferably 2.5:1 to 1:2.5, more preferably 1:1 to 2:1.

The second layer typically further comprises a support material (referred to herein below as the "second support material"). The second PGM is generally disposed or supported on the second support material.

The second support material is preferably a refractory oxide. It is preferred that the refractory oxide is selected from the group consisting of alumina, silica, ceria, silica alumina, ceria-alumina, ceria-zirconia and alumina-magnesium oxide. More preferably, the refractory oxide is selected from the group consisting of alumina, ceria, silica-alumina and ceria-zirconia. Even more preferably, the refractory oxide is alumina or silica-alumina, particularly silica-alumina.

A particularly preferred second layer comprises a silica-alumina support, platinum, palladium, barium, a molecular sieve, and a platinum group metal (PGM) on an alumina support, e.g. a rare earth-stabilised alumina. Particularly preferably, this preferred second layer comprises a first zone comprising a silica-alumina support, platinum, palladium, barium, a molecular sieve, and a second zone comprising a platinum group metal (PGM) on an alumina support, e.g. a rare earth-stabilised alumina. This preferred second layer may have activity as an oxidation catalyst, e.g. as a diesel oxidation catalyst (DOC).

A further preferred second layer comprises, consists of, or consists essentially of a platinum group metal on alumina This preferred second layer may have activity as an oxidation catalyst, e.g. as a NO₂-maker catalyst.

A further preferred second layer comprises a platinum group metal, rhodium, and a cerium-containing component. Particularly preferred second layers comprise platinum as a platinum group metal, and rhodium, e.g. a mixture or alloy of platinum or rhodium. This preferred second layer may have activity as a NOx reduction catalyst when exposed to rich exhaust gas conditions. This NOx reduction catalyst activity is different to and distinct from selective catalytic reduction (SCR) catalysis.

In other preferred embodiments, more than one of the preferred second layers described above are present, in addition to the NOₓ adsorber catalyst composition. In such embodiments, the one or more additional layers may be present in any configuration, including zoned configurations. For example, a preferred catalyst may comprise a substrate, a storage layer comprising the NOx storage material of the invention, and a second layer, said second layer comprising a first zone having activity as a diesel oxidation catalyst (DOC), said second layer further comprising a second zone having activity as a NOx reduction catalyst when exposed to rich exhaust gas conditions. The first zone and second zone may preferably have the compositions described above in respect to preferred second layers having the requisite catalytic activity.

The storage layer comprising the NOx storage material of the invention may be disposed or supported on the second layer or on the substrate (e.g. the plurality of inner surfaces of the through-flow monolith substrate), and preferably the second layer is disposed or supported on the storage layer.

Alternatively, the second layer may be disposed or supported on the substrate (e.g. the plurality of inner surfaces of the through-flow monolith substrate). In such catalysts, the storage layer is disposed or supported on at least a portion of the second layer, and is preferably disposed or supported directly on at least a portion of the second layer.

The second layer may be disposed or supported on the entire length of the substrate or the storage layer comprising the NOx storage material of the invention. Alternatively the second layer may be disposed or supported on a portion, e.g. 5%, 10%, 20%, 30%, 40%, 50%, 60%, 70%, 80%, 90%, or 95%, of the substrate or the storage layer.

Preferably, the entire length of the substrate is coated with the storage layer comprising the NOₓ storage material as hereinbefore described. In other words, preferably the length of the storage layer is equal to greater than 95% of the length of the substrate, preferably substantially 100% of the length of the substrate, more preferably about 100% of the length of the substrate and even more preferably 100% of the length of the substrate.

A further aspect of the invention is an emission treatment system for treating a flow of a combustion exhaust gas from an internal combustion engine comprising the NOx adsorber catalyst as hereinbefore defined. In preferred systems, the internal combustion engine is a diesel engine, preferably a light duty diesel engine. The NOx adsorber catalyst may be placed in a close-coupled position or in the underfloor position, and preferably is placed in a close-coupled position.

The emission treatment system typically further comprises an emissions control device.

The emissions control device is preferably downstream of the NOx adsorber catalyst.

Examples of an emissions control device include a diesel particulate filter (DPF), a lean NOₓ trap (LNT), a lean NOₓ catalyst (LNC), a selective catalytic reduction (SCR) catalyst, a diesel oxidation catalyst (DOC), a catalysed soot filter (CSF), a passive NOx adsorber (PNA), a diesel cold start catalyst (dCSC^{™}), a selective catalytic reduction filter (SCRF^{™}) catalyst, an ammonia slip catalyst (ASC), a cold start catalyst (dCSC^{™}) and combinations of two or more thereof. Such emissions control devices are all well known in the art.

Some of the aforementioned emissions control devices have filtering substrates. An emissions control device having a filtering substrate may be selected from the group consisting of a diesel particulate filter (DPF), a catalysed soot filter (CSF), and a selective catalytic reduction filter (SCRF^{™}) catalyst.

It is preferred that the emission treatment system comprises an emissions control device selected from the group consisting of a lean NOₓ trap (LNT), an ammonia slip catalyst (ASC), diesel particulate filter (DPF), a selective catalytic reduction (SCR) catalyst, a catalysed soot filter (CSF), a selective catalytic reduction filter (SCRF^{™}) catalyst, and combinations of two or more thereof. More preferably, the emissions control device is selected from the group consisting of a diesel particulate filter (DPF), a selective catalytic reduction (SCR) catalyst, a catalysed soot filter (CSF), a selective catalytic reduction filter (SCRF^{™}) catalyst, and combinations of two or more thereof. Even more preferably, the emissions control device is a selective catalytic reduction (SCR) catalyst or a selective catalytic reduction filter (SCRF^{™}) catalyst.

When the emission treatment system of the invention comprises an SCR catalyst or an SCRF^{™} catalyst, then the emission treatment system may further comprise an injector for injecting a nitrogenous reductant, such as ammonia, or an ammonia precursor, such as urea or ammonium formate, preferably urea, into exhaust gas downstream of the lean NOₓ trap catalyst and upstream of the SCR catalyst or the SCRF^{™} catalyst.

Such an injector may be fluidly linked to a source (e.g. a tank) of a nitrogenous reductant precursor. Valve-controlled dosing of the precursor into the exhaust gas may be regulated by suitably programmed engine management means and closed loop or open loop feedback provided by sensors monitoring the composition of the exhaust gas.

Ammonia can also be generated by heating ammonium carbamate (a solid) and the ammonia generated can be injected into the exhaust gas.

Alternatively or in addition to the injector, ammonia can be generated in situ (e.g. during rich regeneration of a LNT disposed upstream of the SCR catalyst or the SCRF^{™} catalyst, e.g. a lean NOₓ trap catalyst of the invention). Thus, the emission treatment system may further comprise an engine management means for enriching the exhaust gas with hydrocarbons.

The SCR catalyst or the SCRF^{™} catalyst may comprise a metal selected from the group consisting of at least one of Cu, Hf, La, Au, In, V, lanthanides and Group VIII transition metals (e.g. Fe), wherein the metal is supported on a refractory oxide or molecular sieve. The metal is preferably selected from Ce, Fe, Cu and combinations of any two or more thereof, more preferably the metal is Fe or Cu.

The refractory oxide for the SCR catalyst or the SCRF^{™} catalyst may be selected from the group consisting of Al₂O₃, TiO₂, CeO₂, SiO₂, ZrO₂ and mixed oxides containing two or more thereof. The non-zeolite catalyst can also include tungsten oxide (e.g. V₂O₅/WO₃/TiO₂, WOₓ/CeZrO₂, WOₓ/ZrO₂ or Fe/WOₓ/ZrO₂).

It is particularly preferred when an SCR catalyst, an SCRF^{™} catalyst or a washcoat thereof comprises at least one molecular sieve, such as an aluminosilicate zeolite or a SAPO. The at least one molecular sieve can be a small, a medium or a large pore molecular sieve. By "small pore molecular sieve" herein we mean molecular sieves containing a maximum ring size of 8, such as CHA; by "medium pore molecular sieve" herein we mean a molecular sieve containing a maximum ring size of 10, such as ZSM-5; and by "large pore molecular sieve" herein we mean a molecular sieve having a maximum ring size of 12, such as beta. Small pore molecular sieves are potentially advantageous for use in SCR catalysts.

In the emission treatment system of the invention, preferred molecular sieves for an SCR catalyst or an SCRF^{™} catalyst are synthetic aluminosilicate zeolite molecular sieves selected from the group consisting of AEI, ZSM-5, ZSM-20, ERI including ZSM-34, mordenite, ferrierite, BEA including Beta, Y, CHA, LEV including Nu-3, MCM-22 and EU-1, preferably AEI or CHA, and having a silica-to-alumina ratio of about 10 to about 50, such as about 15 to about 40.

In a first emission treatment system embodiment, the emission treatment system comprises the NOx adsorber catalyst of the invention and a catalysed soot filter (CSF). The NOx adsorber catalyst is typically followed by (e.g. is upstream of) the catalysed soot filter (CSF). Thus, for example, an outlet of the NOx adsorber catalyst is connected to an inlet of the catalysed soot filter.

A second emission treatment system embodiment relates to an emission treatment system comprising the NOx adsorber catalyst of the invention, a catalysed soot filter (CSF) and a selective catalytic reduction (SCR) catalyst.

The NOx adsorber catalyst is typically followed by (e.g. is upstream of) the catalysed soot filter (CSF). The catalysed soot filter is typically followed by (e.g. is upstream of) the selective catalytic reduction (SCR) catalyst. A nitrogenous reductant injector may be arranged between the catalysed soot filter (CSF) and the selective catalytic reduction (SCR) catalyst. Thus, the catalysed soot filter (CSF) may be followed by (e.g. is upstream of) a nitrogenous reductant injector, and the nitrogenous reductant injector may be followed by (e.g. is upstream of) the selective catalytic reduction (SCR) catalyst.

In a third emission treatment system embodiment, the emission treatment system comprises the NOx adsorber catalyst of the invention, a selective catalytic reduction (SCR) catalyst and either a catalysed soot filter (CSF) or a diesel particulate filter (DPF).

In the third emission treatment system embodiment, the NOx adsorber catalyst of the invention is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the catalyzed monolith substrate may be followed by (e.g. is upstream of) a nitrogenous reductant injector, and the nitrogenous reductant injector may be followed by (e.g. is upstream of) the selective catalytic reduction (SCR) catalyst. The selective catalytic reduction (SCR) catalyst are followed by (e.g. are upstream of) the catalysed soot filter (CSF) or the diesel particulate filter (DPF).

A fourth emission treatment system embodiment comprises the NOx adsorber catalyst of the invention and a selective catalytic reduction filter (SCRF^{™}) catalyst. The NOx adsorber catalyst of the invention is typically followed by (e.g. is upstream of) the selective catalytic reduction filter (SCRF^{™}) catalyst.

A nitrogenous reductant injector may be arranged between the NOx adsorber catalyst and the selective catalytic reduction filter (SCRF^{™}) catalyst. Thus, the NOx adsorber catalyst may be followed by (e.g. is upstream of) a nitrogenous reductant injector, and the nitrogenous reductant injector may be followed by (e.g. is upstream of) the selective catalytic reduction filter (SCRF^{™}) catalyst.

When the emission treatment system comprises a selective catalytic reduction (SCR) catalyst or a selective catalytic reduction filter (SCRF^{™}) catalyst, such as in the second to fourth exhaust system embodiments described hereinabove, an ASC can be disposed downstream from the SCR catalyst or the SCRF^{™} catalyst (i.e. as a separate monolith substrate), or more preferably a zone on a downstream or trailing end of the monolith substrate comprising the SCR catalyst can be used as a support for the ASC.

Another aspect of the invention relates to a vehicle. The vehicle comprises an internal combustion engine, preferably a diesel engine. The internal combustion engine preferably the diesel engine, is coupled to an emission treatment system of the invention.

It is preferred that the diesel engine is configured or adapted to run on fuel, preferably diesel fuel, comprising ≤ 50 ppm of sulfur, more preferably ≤ 15 ppm of sulfur, such as ≤ 10 ppm of sulfur, and even more preferably ≤ 5 ppm of sulfur.

The vehicle may be a light-duty diesel vehicle (LDV), such as defined in US or European legislation. A light-duty diesel vehicle typically has a weight of < 2840 kg, more preferably a weight of < 2610 kg. In the US, a light-duty diesel vehicle (LDV) refers to a diesel vehicle having a gross weight of ≤ 8,500 pounds (US lbs). In Europe, the term light-duty diesel vehicle (LDV) refers to (i) passenger vehicles comprising no more than eight seats in addition to the driver's seat and having a maximum mass not exceeding 5 tonnes, and (ii) vehicles for the carriage of goods having a maximum mass not exceeding 12 tonnes.

Alternatively, the vehicle may be a heavy-duty diesel vehicle (HDV), such as a diesel vehicle having a gross weight of > 8,500 pounds (US lbs), as defined in US legislation.

A further aspect of the invention is a method of treating an exhaust gas from an internal combustion engine comprising contacting the exhaust gas with the NOx adsorber catalyst as hereinbefore described or the emission treatment system as hereinbefore described. In preferred methods, the exhaust gas is a rich gas mixture. In further preferred methods, the exhaust gas cycles between a rich gas mixture and a lean gas mixture.

In some preferred methods of treating an exhaust gas from an internal combustion engine, the exhaust gas is at a temperature of about 150 to 300 °C.

A further aspect of the invention is the use of a NOx storage material as hereinbefore described to absorb NOx in an exhaust gas from an internal combustion engine.

### EXAMPLES

The invention will now be illustrated by the following non-limiting examples.

### Materials

All materials are commercially available and were obtained from known suppliers, unless noted otherwise.

### General preparation 1

451 g Nd(NO₃)₃ was dissolved in 3583 g demineralized water. 1850 g of a high surface area (>40 m²/g) CeO₂ was added in powder form and the mixture stirred for 60 minutes. The resulting slurry was spray-dried on a Spray Dryer in counter-current mode (two-fluid, fountain nozzle, with inlet temperature set at 300 °C and outlet 110 °C). The resulting powder was collected from the cyclone. The powder was calcined at 650 °C for 1 hour in a static oven to produce CeO₂.NdO

### General preparation 2

451 g Nd(NO₃)₃ was dissolved in 3583 g demineralized water. 1850 g of a cerium-based mixed oxide (composition [CeO₂(90%).LaO(5%).ZrO₂(5%)]) was added in powder form and the mixture stirred for 60 minutes. The resulting slurry was spray-dried on a Spray Dryer in counter-current mode (two-fluid, fountain nozzle, with inlet temperature set at 300 °C and outlet 110 °C). The resulting powder was collected from the cyclone. The powder was calcined at 650 °C for 1 hour in a static oven to produce [CeO₂(90%).LaO(5%).ZrO₂(5%)].NdO

### Example Preparation

### Preparation of [AI203. CeO₂.MgO].Pt.Pd.[(CeO₂)NdO] - Composition A

1.24 g/in³ [Al₂O₃.CeO₂.MgO] was made into a slurry with distilled water and then milled to reduce the average particle size (d₉₀ = 6-8 µm). To the slurry, 43.5 g/ft³ of soluble Pt salt and 9 g/ft³ of soluble Pd salt in solution were added, and stirred until homogenous. The Pt/Pd was allowed to adsorb onto the support for 1 hour. To this slurry was added 3 g/in³ (CeO₂)NdO (prepared according to general procedure 1 above) followed by 0.2 g/in³ alumina binder, and stirred until homogenous to form a washcoat.

### Preparation of [Al₂O₃.CeO₂.MgO].Pt.Pd.[(CeO₂.ZrO₂.NdO)Nd] - Composition B

1.24 g/in³ [Al₂O₃.CeO₂.MgO] was made into a slurry with distilled water and then milled to reduce the average particle size (d₉₀ = 6-8 µm). To the slurry, 43.5 g/ft³ of soluble Pt salt and 9 g/ft³ of soluble Pd salt in solution were added, and stirred until homogenous. The Pt/Pd was allowed to adsorb onto the support for 1 hour. To this slurry was added 3 g/in³ [CeO₂(90%).LaO(5%).ZrO₂(5%)].NdO (prepared according to general preparation 2 above) followed by 0.2 g/in³ alumina binder, and stirred until homogenous to form a washcoat.

### Preparation of [Al₂O₃.SiO₂].Pt.Pd - Composition C

A soluble Pt salt (43 gft⁻³) and a soluble Pd salt (22 gft⁻³) were added to a slurry of [Al₂O₃(95%).SiO₂(5%)](1.2 gin⁻³) in water. The Pt and Pd were allowed to adsorb to the alumina support for 1 hour. To this slurry was added Beta Zeolite (0.3 gin⁻³) and stirred until homogenous followed by addition of Ba (100 gft⁻³) and stirred until homogenous. The resultant slurry was made into a washcoat and thickened with natural thickener (hydroxyethylcellulose).

### Preparation of [CeO₂].Rh.Pt.Al₂O₃ - Composition D

A soluble Pt salt (70 gft⁻³) was added to a slurry of [Al₂O₃](1.2 gin⁻³) and citric acid (200 gft⁻³) in water. The Pt was allowed to adsorb to the alumina support for 1 hour. The resultant slurry was made into a washcoat and thickened with natural thickener (hydroxyethylcellulose).

### Catalyst 1

Each of compositions A, C and D were coated sequentially onto a ceramic or metallic monolith using standard coating procedures. Washcoat composition C was coated from the inlet end of the substrate to about 50% of the substrate length. Washcoat composition D was coated from the outlet end of the substrate to about 50% of the substrate length. The coated substrate was dried at 100 °C and calcined at 500 °C.

### Catalyst 2

Each of compositions B, C and D were coated sequentially onto a ceramic or metallic monolith using standard coating procedures. Washcoat composition C was coated from the inlet end of the substrate to about 50% of the substrate length. Washcoat composition D was coated from the outlet end of the substrate to about 50% of the substrate length. The coated substrate was dried at 100 °C and calcined at 500 °C.

### Experimental results

Catalysts 1 and 2 were test fresh and engine aged. The engine aging involved 40 FUL cycles. FUL (full useful life) cycles are an accelerated aging approximation. Each FUL cycle was based on the following sequence: 300°C lean, 0.25g S exposure followed by a DPF regen. Within each FUL cycle, this sequence was repeated 4 times and on the final time the DPF regen was followed by a 670°C rich DeSOx. The catalysts were performance tested over a NOx reduction efficiency test (NRE) (target NOₓ exposure of 1.5 g, followed by a 20 second rich purge) using a 1.6 litre bench mounted diesel engine. Emissions were measured pre- and post-catalyst.

### Example 1

The NOₓ reduction performance of the catalysts was assessed by measuring NOₓ reduction of 1.5 g NOₓ stored. The results from one representative NRE (NOx reduction efficiency) at 275 °C, following an activating precondition, are shown in Table 1 below.

**Table 1**

| **Ageing Conditions** | **NOx Conversion (%)** | |
|---|---|---|
| | *Catalyst 1* | *Catalyst 2* |
| Fresh | 56% | 53% |
| 40 FUL cycles | 46% | 52% |

It can be seen from the results in Table 1 that Catalyst 2, comprising a NOx storage material according to the invention, is more stable to rich ageing and gives a more stable level of NOx conversion during a rich purge.

## Claims

1. A NOx storage material comprising a cerium-based mixed oxide comprising cerium, oxygen, and a first rare earth metal other than cerium,
wherein said NOx storage material further comprises a second rare earth metal other than cerium;
wherein said first rare earth metal is different to said second rare earth metal; and
wherein said second rare earth metal is disposed or supported on the surface of the cerium-based mixed oxide.

2. The NOx storage material according to claim 1, wherein said first rare earth metal is lanthanum.

3. The NOx storage material according to claim 1, wherein said first rare earth metal is lanthanum and said second rare earth metal is neodymium.

4. The NOx storage material according to any preceding claim, further comprising zirconium.

5. The NOx storage material according to any preceding claim, having the following composition:
50-95 wt% CeO₂
1-10 wt% ZrO₂
0.5-20 wt% first rare earth metal other than ceria
0.5-20 wt% second rare earth metal other than ceria

6. The NOx storage material according to any preceding claim, wherein the NOx storage material is substantially free of alkali metals or alkaline earth metals.

7. The NOx storage material according to any preceding claim, wherein the NOx storage material is substantially free of barium.

8. The NOx storage material according to any preceding claim, further comprising one or more platinum group metals.

9. The NOx storage material according to claim 8, wherein the one or more platinum group metals is selected from the group consisting of platinum, palladium, rhodium, and mixtures or alloys thereof.

10. The NOx storage material according to claim 8 or claim 9, wherein the more or more platinum group metals is a mixture or alloy of platinum and palladium.

11. A method of making a NOx storage material, comprising mixing a solution of a non-cerium rare earth metal salt with ceria particles, spray-drying the particles, and heating the spray-dried particles, to produce a spray dried powder of the NOx storage material.

12. The method according to claim 11, wherein the spray-drying of the particles is carried out with an inlet temperature of between 250 and 350 °C.

13. The method according to claim 11 or claim 12, wherein the spray-drying of the particles is carried out with an outlet temperature of between 80 and 140 °C.

14. The method according to any one of claims 11 to 13, further comprising the step of drying the spray dried powder at a temperature of between 400 and 800 °C.

15. A NOx storage material obtained or obtainable by the method of any of claims 11 to 14.

16. A NOx adsorber catalyst comprising a storage layer, said storage layer comprising a NOx storage material according to any one of claims 1 to 10 or 15.

17. The NOx adsorber catalyst according to claim 16, wherein the storage layer is supported on a metal or ceramic substrate.

18. The NOx adsorber catalyst of claim 17, wherein the substrate is a flow-through monolith or a filter monolith.

19. The NOx adsorber catalyst according to any one of claims 16 to 18, further comprising one or more additional layers.

20. An emission treatment system for treating a flow of a combustion exhaust gas from an internal combustion engine comprising the NOx adsorber catalyst of any one of claims 16 to 19.

21. The emission treatment system of claim 20, wherein the internal combustion engine is a diesel engine.

22. The emission treatment system of claim 20 or claim 21, further comprising a selective catalytic reduction catalyst system, a particulate filter, a selective catalytic reduction filter system, a passive NOx adsorber, a three-way catalyst system, or combinations thereof.

23. A method of treating an exhaust gas from an internal combustion engine comprising contacting the exhaust gas with the NOx adsorber catalyst of any one of claims 16 to 19.

24. The method of treating an exhaust gas from an internal combustion engine as claimed in claim 23, wherein the exhaust gas is at a temperature of about 150 to 300 °C.

25. Use of a NOx storage material according to any one of claims 1 to 10 to absorb NOx in an exhaust gas from an internal combustion engine.
